# DEMANDE DE BREVET EUROPEEN

(11) **EP 0 790 455 A1**
(43) Date de publication de la demande: **20.08.1997**
(21) Numéro de dépôt: 97420027.1
(22) Date de dépôt: 14.02.1997
(51) Int. Cl.: F16L 13/02, F16L 13/08, F16L 33/26

(54) **Procédé pour la fixation des embouts de raccordement des tuyauteries flexibles, et tuyauteries obtenues**

(30) Priorité: 14.02.1996 FR 9602086
(71) Demandeur: Souplesse Fonctionnelle Systématique SFZ, 69680 Chassieu (FR)
(72) Inventeur: Stocker, Roger, 69300 Caluire (FR)
(74) Mandataire: Monnier, Guy

(57) **Abrégé**

L'invention consiste à faire comporter à chaque embout (14) une partie arrière d'emboîtement (14a), à engager cette partie (14a) sur le tuyau (12) et la tresse (11), et à opérer depuis l'extérieur de l'embout (14) une soudure traversante (15) au niveau des extrémités des pièces (11, 12) pour assembler ces dernières audit embout.

## Description

La présente invention a trait aux compensateurs et autres tuyauteries flexibles constitués par une longueur de tuyau annelé déformable recouverte par une tresse souple de protection, ladite longueur étant pourvue à ses extrémités d'embouts cylindriques de raccordement.

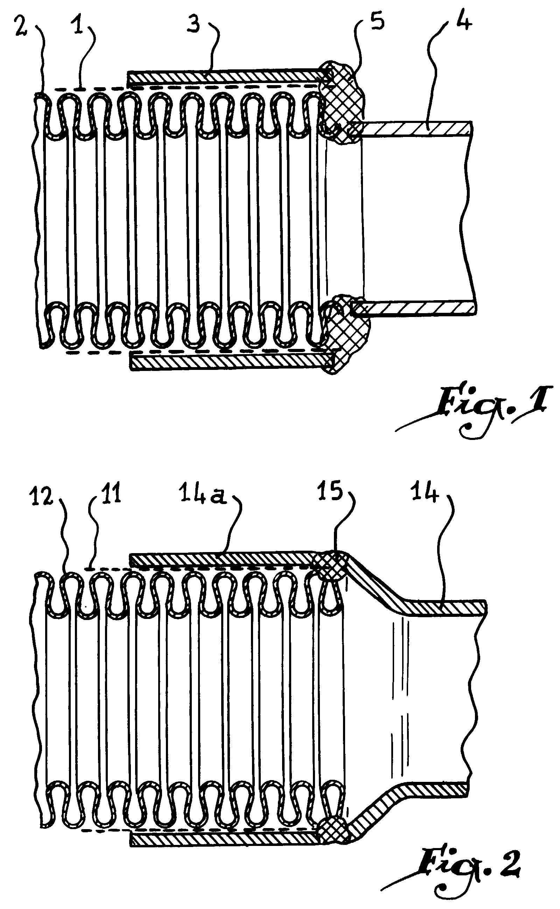

A l'heure actuelle, lorsqu'on a affaire à des tuyauteries flexibles en acier inoxydable, on a habituellement recours, pour l'assemblage des embouts sur les extrémités de la longueur de tuyau, à la technique qui a été schématiquement illustrée à la figure 1 du dessin annexé aux présentes.

Comme montré, sur la tresse 1 qui recouvre le tuyau annelé 2 est engagée une bague 3 qui est fixée à l'extrémité arrière d'un embout 4 par un cordon périphérique de soudure référencé 5, lequel cordon opère par fusion l'assemblage des extrémités des quatre pièces coucourantes 1, 2, 3 et 4 intéressées.

On conçoit que si un tel procédé assure bien une fixation efficace des embouts de raccordement, sa mise en oeuvre est relativement délicate puisqu'elle implique un positionnement précis des quatre pièces précitées et le maintien exact de celles-ci en position. Par ailleurs, la réalisation du cordon de soudure 5 provoque fréquemment l'apparition de bavures ou autres aspérités à l'intérieur de la tuyauterie, en créant des risques de rétention sur le fluide qui parcourt celle-ci.

C'est à ces inconvénients qu'entend principalement remédier la présente invention, laquelle a pour objet le procédé de fixation qui est défini à la revendication 1.

En fait l'invention consiste essentiellement à faire comporter à chaque embout une partie arrière d'emboîtement propre à être engagée à jeu réduit sur la tresse recouvrant le tuyau annelé, et à opérer depuis l'extérieur une soudure traversante au niveau des extrémités desdits tuyau et tresse afin de les assembler à l'embout.

On comprend qu'un tel procédé permet de supprimer la bague d'assemblage du processus classique et le maintien en position précis des pièces à assembler. De plus, la soudure présente à l'intérieur de la tuyauterie une surface parfaitement lisse qui évite tout risque de rétention.

Le dessin annexé, donné à titre d'exemple, permettra de mieux comprendre l'invention, les caractéristiques qu'elle présente et les avantages qu'elle est susceptible de procurer:

Comme indiqué plus haut, figure 1 illustre en coupe axiale le procédé classique pour la fixation d'un embout de raccordement.

Figure 2 représente de la même manière le mode de fixation suivant la présente invention.

En figure 2, on peut voir que l'extrémité arrière de l'embout 14 représenté comporte une partie d'emboîtement 14a dont le diamètre intérieur est légèrement supérieur au diamètre extérieur de la tresse 11 qui recouvre le tuyau annelé usuel 12. Cette partie d'emboîtement 14a est ainsi susceptible d'être engagée axialement à jeu réduit sur l'extrémité considérée de l'ensemble 11-12, à la manière illustrée.

Une fois cet engagement réalisé, on procède à une soudure traversante au niveau de l'extrémité terminale des deux pièces 11 et 12. Cette soudure est effectuée depuis l'extérieur de la partie 14a afin d'assembler solidement les trois pièces 11, 12 et 14 à l'aide d'un cordon 15.

On observera que la partie de ce cordon de soudure 15 qui se trouve à l'intérieur de la tuyauterie présente une surface parfaitement lisse qui ne peut de ce fait perturber l'écoulement du fluide qui parcourt la tuyauterie.

Il va de soi que l'embout 14 peut présenter tout profil longitudinal désiré, en fonction des besoins. L'invention s'applique évidemment aux soufflets déformables ou compensateurs qui ne constituent qu'une catégorie particulière de tuyauterie flexible.

## Revendications

1. Procédé pour la fixation des embouts de raccordement des tuyauteries flexibles constituées par une longueur de tuyau annelé déformable (12) recouverte par une tresse de protection (11), caractérisé en ce qu'il consiste à faire comporter à chaque embout (14) une partie arrière d'emboîtement (14a), à engager cette partie (14a) sur le tuyau (12) et la tresse (11), et à opérer depuis l'extérieur de l'embout (14) une soudure traversante (15) au niveau des extrémités des pièces (11, 12) pour assembler ces dernières audit embout.

2. Tuyauterie flexible, du genre constitué par une longueur de tuyau annelé déformable (12) recouverte d'une tresse de protection (11) et pourvue de deux embouts de raccordement (14), caractérisée en ce que les embouts (14) sont fixés en place par mise en oeuvre du procédé suivant la revendication 1.
